# EUROPÄISCHE PATENTSCHRIFT

(11) **EP 2 259 918 B1**
(45) Veröffentlichungstag und Bekanntmachung des Hinweises auf die Patenterteilung: **03.04.2013**
(21) Anmeldenummer: 09727415.3
(22) Anmeldetag: 27.03.2009
(51) Int. Cl.: B32B 13/14, B29C 70/44

(54) **SANDWICHLAMINAT UND VERFAHREN ZUR HERSTELLUNG EINES SANDWICHLAMINATS**
SANDWICH LAMINATE AND METHOD FOR THE PRODUCTION OF A SANDWICH LAMINATE
STRATIFIÉ SANDWICH, ET PROCÉDÉ DE FABRICATION D'UN STRATIFIÉ SANDWICH

(30) Priorität: 02.04.2008 DE 102008016886
(43) Veröffentlichungstag der Anmeldung: 15.12.2010
(73) Patentinhaber: Hobas Engineering GmbH, 9020 Klagenfurt (AT)
(72) Erfinder: SIMONER, Thomas, A-9063 Maria Saal (AT)
(74) Vertreter: Schweiger, Johannes
(86) Internationale Anmeldenummer: PCT/EP2009/002246
(87) Internationale Veröffentlichungsnummer: WO 2009/121525

(56) Entgegenhaltungen:
- EP-A- 0 786 325
- WO-A-2005/014952
- WO-A-2005/030474
- WO-A-2005/111126
- GB-A- 2 224 283

## Beschreibung

Die Erfindung betrifft ein Sandwichlaminat nach Anspruch 1 und ein Verfahren zur Herstellung eines Sandwichlaminats nach Anspruch 10.

Laminate sind eine Untergruppe der Faserverbundwerkstoffe und bestehen meist aus mehreren übereinander gelegten Fasermatten mit unterschiedlichen Hauptfaserrichtungen.

Als Fasern kommen beispielsweise Glasfasern, Kohlenstofffasern, Keramikfasern, Aramidfasern, Borfasern, Stahlfasern, Naturfasern oder Nylonfasern zum Einsatz.

Lamiante werden durch Handlegeverfahren (laminieren), Handauflegen mit Vakuumpressen, Faserspritzen, Prepreg-Technologie, Spritzpressen oder Vakuum-Infusion hergestellt.

Laminate mit unterschiedlichen Schichten werden als Sandwichlaminate bezeichnet. Bei Sandwichlaminaten besteht das Problem, dass von einer planen Form abweichende Bauteile, wie beispielsweise Klöpperböden, mit den bekannten Laminatmaterialien und/oder Verfahren nicht ohne größere Probleme hergestellt werden können.

Weiterhin ist bekannt, dass für die Herstellung von Fasern bestimmter Faserrichtung oder bestimmter Faserfestigkeit oder anderer spezifischer Eigenschaften vergleichsweise viel Energie benötigt wird. Fasern sind daher vergleichsweise teuer.

Es ist daher die Aufgabe der vorliegenden Erfindung, ein günstig herstellbares Sandwichlaminat vorzugeben, mit dem auf einfache Weise auch nicht plane Bauteile hergestellt werden können.

Grundidee der vorliegenden Erfindung ist es dabei, das Innere eines Sandwichlaminats zumindest teilweise aus granularer Materie auszubilden. Granulate beziehungsweise körnige Füllstoffe sind meist erheblich günstiger als Fasern und es gibt eine Vielzahl von verfügbaren Granulaten mit unterschiedlichen physikalischen Eigenschaften, die für das erfindungsgemäße Sandwichlaminat verwendet werden können.

Granulate sind einfach zu transportieren und leicht zu verarbeiten, da sie in trockener Form meist rieselfähig sind und darüber hinaus leicht dosierbar sind.

Ein solches Sandwichlaminat ist erfindungsgemäß aufgebaut aus:
- einer faserhaltigen Unterschicht,
- einer faserhaltigen Oberschicht und
- mindestens einer zumindest teilweise aus granularer Materie gebildeten, zwischen der Unterschicht und der Oberschicht angeordneten Zwischenschicht.

Im Vergleich zu üblichen Zwischenschichten, auch als Kernschicht bezeichnet, die beispielsweise aus Balsaholz oder Abstandsgewebe bestehen, bietet die Verwendung von granularer Materie Vorteile wie die Reduktion der Materialkosten und eine einfache Verarbeitung sowie eine mögliche Erhöhung der Brand- und Impactbeständigkeit, der Schalldämmung sowie der thermischen Isolation von aus dem Sandwichlaminat hergestellten Bauteilen. Dabei ist es von besonderem Vorteil, wenn der Faseranteil in der Zwischenschicht kleiner 10 Masse-%, insbesondere kleiner 5 Masse-% ist.

Besonders vorteilhaft zur innigen Verbindung der faserhaltigen Unterschicht und der faserhaltigen Oberschicht mit der aus granularer Materie bestehenden Zwischenschicht ist Kunstharz, insbesondere duroplastisches Kunstharz. Durch die Verwendung von granularer Materie kann außerdem der Harzanteil in Sandwichlaminat erheblich reduziert werden, so dass es möglich ist, die Härtungsreaktionstemperatur deutlich zu senken, wodurch wiederum eine direkte Fertigung von dickwandigen Bauteilen möglich ist, ohne das Laminat bei der Härtung thermisch zu schädigen oder gar zu zerstören. Hier ist es besonders vorteilhaft, wenn die Ober- und/oder die Unterschicht weniger als 70 Masse-%, bevorzugt weniger als 50 Masse-% Harzanteil aufweisen.

Das Sandwichlaminat ist mit dem Kunstharz getränkt, wobei das Tränken insbesondere durch Vakuuminfusionsverfahren mit Vorteil durchgeführt werden kann.

In einer Ausgestaltung der Erfindung, bei der die granulare Materie Granulate/Partikel mit definiertem Korngrößenbereich umfasst, können die physikalischen Eigenschaften des Sandwichlaminats noch besser und gleichmäßiger eingestellt werden.

Durch Verwendung einer rieselbaren granularen Materie ist die Verarbeitung der granularen Materie beim Aufbringen der Zwischenschicht besonders einfach, da die granulare Materie in definierter Menge und gleichmäßig auf die Unterschicht aufgetragen werden kann.

Die Verarbeitung wird darüber hinaus auch dadurch vereinfacht, dass die granulare Materie trocken ist.

In einer Ausführungsform der Erfindung besteht die granulare Materie aus Sand, Schaumglas, Perlite oder körnigen Kunststoffabfällen, wobei auch Mischungen aus den vorgenannten Granulaten möglich sind.

Besonders hochwertige Sandwichlaminate werden erhalten, wenn die Unterschicht und/oder die Oberschicht und/oder die Zwischenschicht homogen ist/sind.

Dickere Sandwichlaminate und/oder Sandwichlaminate mit anderen physikalischen Eigenschaften können erreicht werden, indem in einer Ausführungsform der vorliegenden Erfindung mehrere Zwischenschichten vorgesehen sind, die durch faserhaltige Stärkungsschichten getrennt sind.

Ein erfindungsgemäßes Verfahren zur Herstellung eines Sandwichlaminats, insbesondere eines vorstehend beschriebenen Sandwichlaminats, weißt folgende Schritte auf:
- Aufbringen einer faserhaltigen Unterschicht auf eine Laminatform,
- Aufbringen einer granularen Materie auf die Unterschicht,
- Aufbringen einer faserhaltigen Oberschicht und
- Einbringen von Kunstharz in die Unterschicht, die granulare Materie und die Oberschicht durch Vakuuminfusionsverfahren.

Soweit ein dickeres oder mehrschichtiges Sandwichlaminat herzustellen ist, können vor dem Aufbringen der faserhaltigen Oberschicht im Wechsel mit granularer Materie eine oder mehrere faserhaltige Verstärkungsschichten auf die granulare Materie aufgebracht werden.

Weitere Vorteile und zweckmäßige Ausführungen der Erfindungen sind in den weiteren Ansprüchen, den Figuren, der Beschreibung und den Zeichnungen wiedergegeben.

Darin zeigt:
- Figur 1: ein erfindungsgemäßes Sandwichlaminat mit einer faserhaltigen Unterschicht, einer faserhaltigen Oberschicht und einer Zwischenschicht,
- Figur 2: ein erfindungsgemäßes Sandwichlaminat mit einer faserhaltigen Unterschicht, einer faserhaltigen Oberschicht, drei Zwischenschichten und zwei Verstärkungsschichten und
- Figur 3: eine Vorrichtung zur Herstellung eines erfindungsgemäßen Sandwichlaminats durch Vakuuminfusionsverfahren.

In den Figuren sind entsprechende Bauteile mit identischen Bezugszeichen gekennzeichnet.

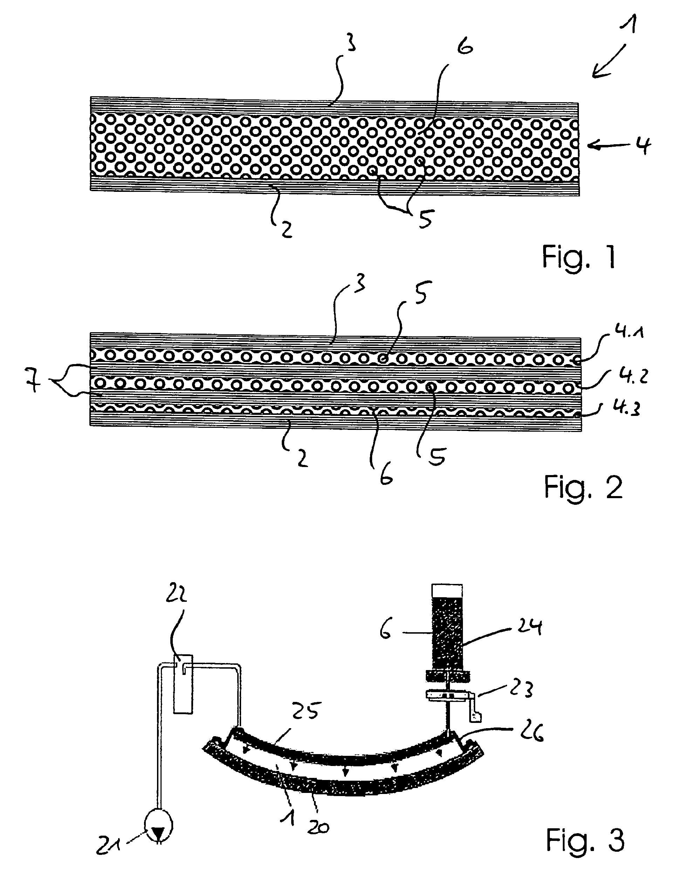

Figur 1 zeigt ein Sandwichlaminat, das aus einer faserhaltigen Unterschicht 2, einer faserhaltigen Oberschicht 3 und einer aus schematisch dargestellter granularer Materie 5 und ausgehärtetem duroplastischen Kunstharz 6 hergestellten Zwischenschicht 4 besteht, wobei das Kunstharz 6 zumindest teilweise auch in die faserhaltige Unterschicht 2 und die faserhaltige Oberschicht 3 eindringt, damit eine innige Verbindung zwischen der Unterschicht 2, der Oberschicht 3 und der dazwischenliegenden Zwischenschicht 4 entsteht.

Die Fasern der faserhaltigen Unterschicht 2 und/oder faserhaltigen Oberschicht 3 können vorzugsweise aus extrem dünnen Fasern mit einigen Mikrometern Durchmesser bestehen, wobei die Fasern in definierter Anzahl pro Fläche vorliegen können und/oder möglichst homogen ausgerichtet sein können, um die Festigkeit in bestimmter oder in verschiedene Richtungen zu beeinflussen.

Durch das Zusammenspiel der faserhaltigen Unterschicht 2 und der faserhaltigen Oberschicht 3 mit der dazwischenliegenden Zwischenschicht 4 können Vorteile der verschiedenen Stoffe in einem Verbundwerkstoff vereint werden.

In dem in Figur 2 dargestellten mehrschichtigen Sandwichlaminat ist die Zwischenschicht 4 durch faserhaltige Verstärkungsschichten 7 in mehrere Abschnitte beziehungsweise mehrere Zwischenschichten 4.1, 4.2 und 4.3 unterteilt, wodurch einerseits andere Eigenschaften erreicht und andererseits auch dickere Sandwichlaminate hergestellt werden können.

Insbesondere bei der Verwendung von Schaumglas oder Perlite als granulare Materie 5 kann eine deutlich höhere Brand- und/oder Impactfestigkeit erreicht werden.

In Figur 3 ist durch die dargestellte Vorrichtung zur Herstellung eines Sandwichlaminats das Verfahren zur Herstellung eines Sandwichlaminats erkennbar. Aus einem Vorratstank 24 wird über ein zur Umgebung abgeschlossenes Leitungssystem Kunstharz 6 aus dem Vorratstank 24 über eine Leistungsunterbrechung 23 durch das mit einer Vakuumfolie 26 luftdicht abgedeckte Schichtwerk aus Unterschicht, Zwischenschicht(en) und Oberschicht sowie ggf. Verstärkungsschichten geleitet, bis das Kunstharz 6 in einer Harzfalle 22 austritt.

Der Unterdruck wird durch eine Vakuumpumpe 21 erzeugt.

Nachdem das Kunstharz 6 durch das Schichtwerk gesaugt wurde und das Schichtwerk mit Kunstharz 6 zumindest teilweise, vorzugsweise vollständig, gefüllt ist, erfolgt das Aushärten des Kunstharzes 6 und anschließend das Entformen des Laminatverbundes beziehungsweise des Sandwichlaminats 1.

Die Laminatform 20 sorgt für die Formgebung des Sandwichlaminats 1.

Die Aufschichtung des Schichtwerks zum Beginn des Verfahrens und vor Aufbringung der Vakuumfolie 26 kann durch einen das Schichtwerk umgebenden Ring oder einen Rahmen mit definierter Höhe erleichtert werden.

## Patentansprüche

1. Sandwichlaminat (1), aufgebaut aus:
- einer faserhaltigen Unterschicht (2),
- einer faserhaltigen Oberschicht (3) und
- mindestens einer zumindest teilweise aus granularer Materie (5) gebildeten, zwischen der Unterschicht (2) und der Oberschicht (3) angeordneten Zwischenschicht (4), wobei
das Sandwichlaminat (1) Kunstharz enthält und mit dem Kunstharz getränkt ist.

2. Sandwichlaminat (1) nach Anspruch 1, bei dem das Kunstharz (6) duroplastisch ist.

3. Sandwichlaminat (1) nach Anspruch 2, bei dem das Sandwichlaminat durch Vakuuminfusionsverfahren mit dem Kunstharz (6) getränkt ist..

4. Sandwichlaminat (1) nach einem der vorhergehenden Ansprüche, bei dem die granulare Materie (5) Körner/Partikel mit definiertem Korngrößenbereich umfasst.

5. Sandwichlaminat (1) nach einem der vorhergehenden Ansprüche, bei dem die granulare Materie (5) aus mindestens einem der folgenden Partikel besteht:
- Sand
- Schaumglas
- Perlite
- körnige Kunststoffabfälle.

6. Sandwichlaminat (1) nach einem der vorhergehenden Ansprüche, bei dem die Unterschicht (2) und/oder die Oberschicht (3) und/oder die Zwischenschicht (4) homogen ist/sind.

7. Sandwichlaminat (1) nach einem der vorhergehenden Ansprüche, bei dem mehrere Zwischenschichten (4.1, 4.2, 4.3) vorgesehen sind, die durch faserhaltige Verstärkungsschichten (7) getrennt sind.

8. Verfahren zur Herstellung eines Sandwichlaminats, insbesondere gemäß einem der vorhergehenden Ansprüche, mit folgenden Schritten:
- Aufbringen einer faserhaltigen Unterschicht auf eine Laminatform,
- Aufbringen einer granularen Materie auf die Unterschicht,
- Aufbringen einer faserhaltigen Oberschicht und
- Einbringen von Kunstharz in die Unterschicht, die Zwischenschicht und die Oberschicht durch Vakuuminfusionsverfahren.

9. Verfahren nach Anspruch 8, wobei das Kunstharz duroplastisch ist.

10. Verfahren nach Anspruch 8 oder 9, wobei vor dem Aufbringen der faserhaltigen Oberschicht im Wechsel mit granularer Materie eine oder mehrere faserhaltige Verstärkungsschichten auf die granulare Materie aufgebracht werden.

## Claims

1. A sandwich laminate (1) composed of:
- a fiber-containing sublayer (2),
- a fiber-containing top layer (3),
- at least one intermediate layer (4) which is located between the sublayer (2) and the top layer (3) and which is formed at least in part from granular matter (5),
the sandwich laminate (1) containing artificial resin and being impregnated with the artificial resin.

2. The sandwich laminate (1) as claimed in Claim 1, wherein the artificial resin (6) is duroplastic.

3. The sandwich laminate (1) as claimed in Claim 2, wherein the sandwich laminate is impregnated with the artificial resin (6) by vacuum infusion methods.

4. The sandwich laminate (1) as claimed in one of the preceding claims, wherein the granular matter (5) comprises grains/particles with a defined grain size range.

5. The sandwich laminate (1) as claimed in one of the preceding claims, wherein the granular matter (5) consists of at least one of the following particles:
- sand
- foamed glass
- perlite
- granularplastic scraps.

6. The sandwich laminate (1) as claimed in one of the preceding claims, wherein the sublayer (2) and/or the top layer (3) and/or the intermediate layer (4) is/are homogeneous.

7. The sandwich laminate (1) as claimed in one of the preceding claims, wherein there are several intermediate layers (4.1, 4.2, 4.3) which are separated by fiber-containing reinforcing layers (7).

8. A method for producing a sandwich laminate, especially as claimed in one of the preceding claims, with the following steps:
- application of a fiber-containing sublayer to a laminate form,
- application of a granular matter to the sublayer,
- application of fibercontaining top layer and
- introduction of artificial resin into the sublayer, the intermediate layer and the top layer by vacuum infusion methods.

9. The method as claimed in Claim 8, the artificial resin being duroplastic.

10. The method as claimed in Claim 8 or 9, before application of the fiber-containing top layer in alternation with granular matter one or more Fber-containing reinforcing layers being applied to the granular matter.

## Revendications

1. Laminé sandwich (1), composé :
- d'une couche inférieure (2) contenant des fibres,
- d'une couche supérieure (3) contenant des fibres et
- d'au moins une couche intermédiaire (4) formée au moins en partie de matière granuleuse (5), disposée entre la couche inférieure (2) et la couche supérieure (3),
le laminé sandwich (1) contenant de la résine synthétique et étant imprégné de résine synthétique.

2. Laminé sandwich (1) selon la revendication 1, dans lequel la résine synthétique (6) est duroplastique.

3. Laminé sandwich (1) selon la revendication 2, dans lequel le laminé sandwich est imprégné de résine synthétique (6) par procédé d'infusion sous vide.

4. Laminé sandwich (1) selon l'une quelconque des revendications précédentes, dans lequel la matière granuleuse (5) comprend des grains/des particules avec une grosseur de grains d'un ordre défini.

5. Laminé sandwich (1) selon l'une quelconque des revendications précédentes, dans lequel la matière granuleuse (5) est constituée d'au moins l'une des particules suivantes :
- le sable
- le verre cellulaire
- la perlite
- des déchets granuleux de matières plastiques.

6. Laminé sandwich (1) selon l'une quelconque des revendications précédentes, dans lequel la couche inférieure (2) et/ou la couche supérieure (3) et/ou la couche intermédiaire (4) est/sont homogène/s.

7. Laminé sandwich (1) selon l'une quelconque des revendications précédentes, dans lequel sont prévues plusieurs couches intermédiaires (4.1, 4.2, 4,3) qui sont séparées par des couches de renfort (7) contenant des fibres.

8. Procédé de fabrication d'un laminé sandwich, notamment selon l'une quelconque des revendications précédentes, comportant les étapes suivantes :
- application d'une couche inférieure contenant des fibres sur un moule à laminé,
- application d'une matière granuleuse sur la couche inférieure,
- application d'une couche supérieure contenant des fibres et
- introduction de résine synthétique dans la couche inférieure, la couche intermédiaire et la couche supérieure par procédé d'infusion sous vide.

9. Procédé selon la revendication 8, la résine synthétique étant duroplasticdue.

10. Procédé selon la revendication 8 ou la revendication 9, lors duquel avant l'application de la couche supérieure contenant des fibres, on applique en alternance avec de la matière granuleuse une ou plusieurs couches de renfort contenant des fibres sur la matière granuleuse.
